# EUROPÄISCHE PATENTSCHRIFT

(11) **EP 2 599 246 B1**
(45) Veröffentlichungstag und Bekanntmachung des Hinweises auf die Patenterteilung: **06.10.2021**
(21) Anmeldenummer: 11740838.5
(22) Anmeldetag: 22.07.2011
(51) Int. Cl.: H04H 60/74, H04H 20/08, H04H 20/62, H04H 60/92

(54) **VERFAHREN UND VORRICHTUNG ZUR ÜBERTRAGUNG VON LIEDKENNUNGEN**
METHOD AND APPARATUS FOR TRANSMISSION OF SONG IDENTIFICATIONS
PROCÉDÉ ET DISPOSITIF DE TRANSMISSION D'IDENTIFICATIONS DE CHANSONS

(30) Priorität: 30.07.2010 DE 102010032735
(43) Veröffentlichungstag der Anmeldung: 05.06.2013
(73) Patentinhaber: Volkswagen Aktiengesellschaft, 38440 Wolfsburg (DE)
(72) Erfinder: KRIEGEL, Dieter, 38528 Adenbüttel (DE)
(86) Internationale Anmeldenummer: PCT/EP2011/003675
(87) Internationale Veröffentlichungsnummer: WO 2012/013319

(56) Entgegenhaltungen:
- WO-A1-2004/004246
- WO-A1-2008/057987
- WO-A2-2007/067550
- US-A1- 2006 181 982
- US-A1- 2009 318 082

## Beschreibung

Die Erfindung betrifft ein Verfahren zur Übertragung von Liedkennungen von einem Infotainmentgerät in einem Fahrzeug auf ein Mobilgerät aus einer Mehrzahl von Mobilgeräten über zumindest eine Schnittstelle

Es ist allgemeiner Stand der Technik, dass von einem Rundfunksender Kennungen von Liedern oder Metadaten zu Liedern (beispielsweise Titel, Interpret, Album, Jahr, Genre) übertragen werden, die von einem Radio empfangen und angezeigt und/oder zur weiteren Verarbeitung bereitgestellt werden, die eine eindeutige Identifizierung des Liedes ermöglichen. Eine Kennung oder Metadaten können beispielsweise als RDS-Daten übermittelt werden. Bei digitalen Radios können zudem vielfältige Metadaten dem gesendeten Lied direkt zugeordnet werden. Metadaten oder Kennungen können im ID3-Format oder MPEG-4-Datencontainer vorliegen, aber auch andere Formate sind möglich. Die Metadaten können beispielsweise genutzt werden, um Informationen zum gerade abgespielten Stück anzuzeigen, die Titel in Wiedergabelisten (Playlists) zu sortieren oder Archive zu organisieren. Die Metadaten werden auch als sogenanntes "Tag" bezeichnet.

Wenn bei einer Person ein Lied, welches im Autoradio gespielt wird, Interesse erweckt, so dass die Person sich den Titel oder Interpreten merken möchte, um später das Lied zu kaufen oder weitere Informationen über den Titel oder Interpreten zu erhalten, so ist es möglich dieses Lied per Befehl zu markieren, womit die Liedkennung ― das "Tag" - in einem Speicher des Radios abgelegt wird (Merkfunktion).

Wenn der Speicher mit einem Mobilgerät synchronisiert wird, so werden die Kennungen auf das Mobilgerät übertragen und gespeichert. Werden die Informationen aus dem Mobilgerät über einen Dienst (z.B. im Internet) mit einer Datenbank verknüpft, wird die Anzeige von Zusatzinformationen zum Lied und ein einfacher Kauf des Liedes ermöglicht.

In der US 2009/0061763 ist ein System beschrieben, wobei die Speicherung eines Tags in einem digitalem Radioempfangsgerät erfolgt. Nach Anschluss eines Mobilgeräts werden die Daten direkt übertragen. Nachteilig hierbei ist, dass keine Möglichkeit einer Steuerung der Übertragung der Liedkennungen auf unterschiedliche Mobilgerät ermöglicht wird.

In der WO 2008/057987 A1 werden ein Verfahren und ein System zum Ordern von elektronischem Inhalt, wie beispielsweise Musik, beschrieben. Im Rahmen dieses Verfahrens werden Metadaten, die Liedkennungen enthalten, kontinuierlich oder auf Anfrage eines Benutzers von einem Rundfunkempfänger an ein Mobilgerät übertragen.

Es ist Aufgabe der Erfindung ein Verfahren bereitzustellen, welches es ermöglicht eine Übertragung von Liedkennungen von einem Infotainmentgerät in einem Fahrzeug auf ein Mobilgerät aus einer Mehrzahl von Mobilgeräten zu steuern und zu kontrollieren.

Diese und weitere Aufgaben werden gemäß der vorliegenden Erfindung durch ein Verfahren nach Anspruch 1 gelöst.

Ein Synchronisationsablauf zur Übertragung von gespeicherten Liedkennungen von einem Infotainmentgerät auf zumindest ein Mobilgerät umfasst zumindest folgende Schritte:
- Identifizieren aller über die Schnittstelle verbundenen und/oder verbindbaren Mobilgeräte;
- Ermitteln, ob für ein identifiziertes Mobilgerät eine Voreinstellung gespeichert ist, die eine Übertragung auf dieses Mobilgerät vorsieht;
- Übertragen von gespeicherten Liedkennungen vom Infotainmentgerät
   ∘ automatisch, wenn nur ein einziges Mobilgerät mit dieser Voreinstellung identifiziert wurde, auf dieses Mobilgerät,
   ∘ nach einer Auswahl eines Mobilgeräts aus der Menge der identifizierten Mobilgeräte mittels eines Nutzers, wenn kein Mobilgerät mit dieser Voreinstellung oder mindestens zwei Mobilgeräte mit dieser Voreinstellung identifiziert wurden, auf das ausgewählte Mobilgerät.

Ein Infotainmentgerät umfasst erfindungsgemäß zumindest ein Radioempfangsgerät und eine Speichereinheit. Ein Radioempfangsgerät ist insbesondere geeignet analogen und digitalen Rundfunk zu empfangen bzw. als Internetradio ausgeführt. Die Speichereinheit muss nicht zwingend im Infotainmentgerät integriert sein, sondern muss nur über das Infotainmentgerät ansteuerbar zum Lesen und Schreiben von Daten sein. Das Infotainmentgerät ist in ein Fahrzeug einbaubar oder eingebaut.

Ein Mobilgerät ist erfindungsgemäß ein Mobiltelefon, ein Smartphone, ein Medien-Abspielgerät, ein PDA oder ein digitaler Speicher. Ein digitaler Speicher ist erfindungsgemäß insbesondere ein USB-Datenstick und/oder eine SD-Karte. Das Mobilgerät kann entweder selbst eine Verbindung zu dem Internet aufbauen oder dient als Datenträger zum Anschluss an ein weiteres Gerät, über dem eine Internetverbindung aufgebaut werden kann.

Die Schnittstelle zwischen dem Mobilgerät und dem Infotainmentgerät im Fahrzeug kann als kabelgebundene Schnittstelle und/oder als drahtlose Schnittstelle ausgeführt sein. Eine Schnittstelle kann insbesondere auch als Schnittstelle zu einer Vielzahl von Geräten (Media Device Interface) ausgebildet sein.

Eine drahtlose Schnittstelle kann insbesondere als Funkschnittstelle ausgeführt sein. Die Funkschnittstelle ist erfindungsgemäß eine Standardschnittstelle, insbesondere nach dem Bluetooth-Standard und/oder W-Lan-Standard, aber auch andere Funkschnittstellen sind erfindungsgemäß ausdrücklich eingeschlossen. Die Schnittstelle ermöglicht einen Datenaustausch zwischen dem Mobilgerät und dem Infotainmentgerät und kann zudem derart ausgeprägt sein, dass eine Steuerung der Funktionen auf dem Mobilgerät über das Infotainmentgerät möglich ist.

Ein Mobilgerät ist im Sinne der Erfindung verbunden, wenn es über eine Schnittstelle verbunden ist. Ein verbindbares Mobilgerät ist ein Mobilgerät, das sich in der Reichweite einer drahtlosen Verbindung befindet und damit von der Schnittstelle erkannt werden kann, und/oder ein Mobilgerät, für welches Verbindungsdaten gespeichert sind.

Die Anzeige einer Auswahlmöglichkeit eines Mobilgeräts aus einer Mehrzahl von Mobilgeräten erfolgt erfindungsgemäß auf dem Display des Infotainmentgeräts und/oder auf der Kombianzeige des Fahrzeugs.

Eine Auswahl des Mobilgeräts erfolgt über mindestens eine Taste, insbesondere innerhalb des Fahrzeugs, oder über eine Spracherkennung. Eine Taste kann erfindungsgemäß eine Taste des Infotainmentgeräts und/oder ein Touchscreen des Infotainmentgeräts und/oder eine Taste eines Multifunktionslenkrades und/oder eine sonstige Taste innerhalb des Fahrzeugs sein.

Neben der Auswahl von gleichzeitig verfügbaren Mobilgeräten wird insbesondere auch die Auswahl aus einer sequenziell verfügbaren Anzahl von Mobilgeräten ermöglicht. Wird ein neues Gerät erkannt, erfolgt einmalig die Abfrage, ob es zur Aufnahme der Liedkennungen verwendet werden soll. Die gespeicherten Abfrageergebnisse dienen als Voreinstellung und können zur Vermeidung der Abfrage beim Wiedererkennen eines bereits früher angeschlossenen Gerätes verwendet werden.

Eine Liedkennung bedeutet erfindungsgemäß eine eindeutige Kennzeichnung eines Liedes als Metadaten und/oder ein Liedausschnitt, an dem das vollständige Lied identifiziert werden kann, indem ein Abgleich des Liedausschnittes mit Liedern in einer Datenbank erfolgt. Weiterhin kann erfindungsgemäß eine Liedkennung gespeichert werden, indem der Sender, der das derzeit gehörte Lied sendet, mit der Sendezeit gespeichert wird.

In einer weiteren erfindungsgemäßen Ausprägung enthält die Anzeige eine eindeutige Kennung des mindestens einen identifizierten Mobilgeräts. Die Kennung kann erfindungsgemäß aus einem Namen, einer Nummer, einem Bild oder anderen unterscheidbaren Merkmalen bestehen, wobei eine Kombination verschiedener Kennungen möglich ist.

In einer weiteren Ausführungsform ist eine Voreinstellung im Fahrzeug speicherbar und/oder veränderbar. In einer weiteren Ausführungsform kann als Voreinstellung die Auswahlmöglichkeit in der Abfrage eingeschränkt werden. Eine Einschränkung der Auswahlmöglichkeit kann für vom Nutzer festgelegte Geräte festgelegt werden, insbesondere für eine bestimmte Art von Mobilgeräten und/oder eine bestimmte Marke von Mobilgeräten und/oder Mobilgeräte zur Nutzung von bestimmten Funktionen und/oder eindeutig identifizierbare Mobilgeräte erfolgen.

In einer weiteren Ausprägung ist es möglich, ein Mobilgerät und/oder mehrere Mobilgeräte als Voreinstellung auszuwählen, zu dem die Liedkennungen automatisch, d.h. ohne Abfrage, übertragen werden, sobald der Synchronisierungsablauf gestartet wird. Dabei kann beispielsweise das letzte Gerät, das zur Übernahme der Tags vom Nutzer freigegeben wurde, diese Voreinstellung erhalten. Für ein bisher nicht freigegebenes Gerät erfolgt eine Abfrage, ob es verwendet werden soll. Als weitere Ausführung wird nur das zuletzt freigegebene Gerät wiedererkannt und nicht neu abgefragt. Als weitere Ausführung ist eine Angabe der Reihenfolge der Mobilgeräte möglich, mit welchem Gerät die Synchronisierung erfolgen soll, wenn mehrere Mobilgeräte derartig ausgewählt sind, und wenn die derartig ausgewählten Mobilgeräte gleichzeitig mit dem Infotainmentgerät verbunden sind und/oder verbindbar sind.

In einer weiteren Ausprägung ist es möglich, dass, wenn für ein bestimmtes Mobilgerät eine Voreinstellung gespeichert ist, keine Abfrage zur Auswahl dieses Mobilgeräts notwendig ist, die Liedkennungen direkt auf diesem Mobilgerät abgespeichert werden können. Auch diese Einstellung kann über eine Voreinstellung gesteuert werden.

Die Übertragung von Daten, insbesondere Liedkennungen, vom Infotainmentgerät auf das Mobilgerät wird erfindungsgemäß als Synchronisationsverfahren ausgeführt, indem überprüft wird, ob eine im Infotainmentgerät gespeicherte Liedkennung schon auf dem Mobilgerät gespeichert ist.

Die auf dem Mobilgerät gespeicherten Liedkennungen können dazu dienen unter Nutzung eines Dienstes im Internet vielfältige Informationen zum Interpreten, Titel, Album sowie in diesem Kontext im Internet angebotenen Informationen angezeigt zu bekommen. Weiterhin ist ein Kauf dieses Liedes auf eine einfache Weise möglich.

Ein nicht beanspruchtes System zum Steuern einer Übertragung von Liedkennungen von einem Infotainmentgerät in einem Fahrzeug auf ein Mobilgerät aus einer Mehrzahl von Mobilgeräten enthält
- mindestens eine Schnittstelle zum Verbinden mindestens eines identifizierten Mobilgeräts mit dem Infotainmentgerät über die Schnittstelle,
- mindestens eine Speichereinheit zum Speichern von Liedkennungen,
- eine Einrichtung zum Identifizieren von mit dem Infotainmentgerät über die Schnittstelle verbundenen und/oder verbindbaren Mobilgeräten,
- mindestens eine Recheneinheit zur Ermittlung, ob für ein identifiziertes Mobilgerät eine Voreinstellung gespeichert ist, die eine automatische Übertragung auf dieses Mobilgerät vorsieht,
- eine Recheneinheit zur automatischen Übertragung von Liedkennungen
- mindestens eine Einrichtung zur Auswahl eines Mobilgeräts aus der Menge der identifizierten Mobilgeräte mittels eines Nutzers,
- mindestens eine Einrichtung zur Übertragung von gespeicherten Liedkennungen vom Infotainmentgerät.

Ein nicht beanspruchtes Fahrzeug umfasst zumindest ein derartiges System zum Steuern einer Übertragung von Liedkennungen von einem Infotainmentgerät in einem Fahrzeug auf ein Mobilgerät aus einer Mehrzahl von Mobilgeräten.

Weitere Vorteile und Ausgestaltungen der Erfindung werden anhand eines bevorzugten Ausführungsbeispiels näher erläutert. Die zugehörigen Zeichnungen zeigen:
- Fig. 1: zeigt die kabelgebundene sowie die drahtlose Schnittstelle zwischen Infotainmentgerät und einer Mehrzahl von Mobilgeräten
- Fig. 2: zeigt verschiedene Ausführungen der Schnittstellen
- Fig. 3: zeigt ein Fahrzeug mit dem System
- Fig. 4: zeigt die Schritte des Verfahrens
- Fig. 5: zeigt verschiedene Szenarien zu identifizierten Mobilgeräten

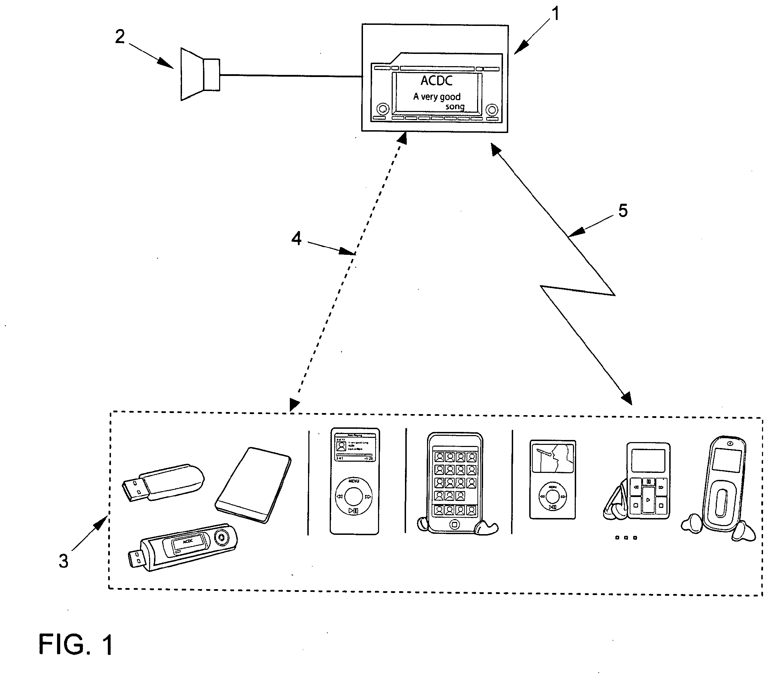

In Fig. 1 ist ein Infotainmentgerät 1 mit einem Lautsprecher 2 dargestellt. Die Verbindung zumindest eines Mobilgeräts aus einer Mehrzahl von Mobilgeräten 3 mit dem Infotainmentgerät 1 erfolgt über eine drahtgebundene Schnittstelle 4 und/oder einer drahtlosen Schnittstelle 5. Dabei ist es möglich, dass mehrere Mobilgeräte 3 gleichzeitig mit dem Infotainmentgerät über eine drahtgebundene und/oder drahtlose Schnittstelle 4, 5 verbunden sind.

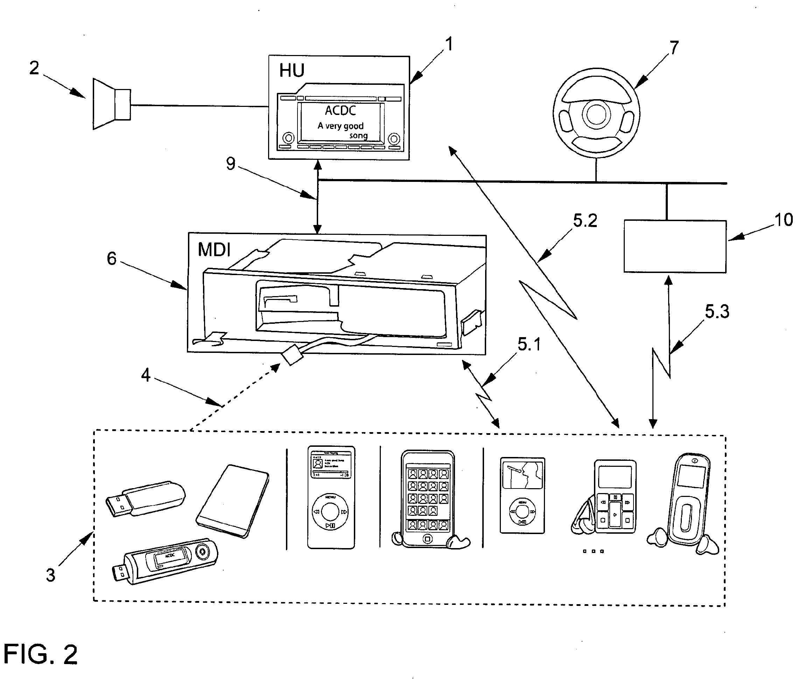

In Fig. 2 zeigt das System 11 zum Steuern einer Übertragung von Liedkennungen. Es ist die Verbindung zwischen Infotainmentgerät 1 und zumindest einem Mobilgerät aus einer Mehrzahl von Mobilgeräten 3 unter Nutzung einer Schnittstelle zu einer Mehrzahl von Geräten (Media Device Interface - MDI) 6. Das MDI ist dabei derart ausgeprägt, dass über verschiedenartige Geräte verbunden werden können. Eine drahtlose Schnittstelle 5 kann dabei als drahtlose Verbindung 5.1 zwischen einem Mobilgerät aus einer Mehrzahl von Mobilgeräten 3 und dem MDI 6 ausgebildet sein und/oder als drahtlose Verbindung 5.2 zwischen einem Mobilgerät aus einer Mehrzahl von Mobilgeräten 3 und dem Infotainmentgerät 1 ausgebildet sein. Auch eine drahtlose Schnittstelle 5.3 zu einem Steuergerät 10 ist möglich. Weiterhin ist ein Multifunktionslenkrad 7 dargestellt, über das eine Auswahl des Mobilgeräts ermöglicht wird. Die datentechnische Verbindung zwischen dem Infotainmentgerät 1, dem MDI 6, dem Multifunktionslenkrad und/oder dem Steuergerät 10 erfolgt über einen Datenbus 9.

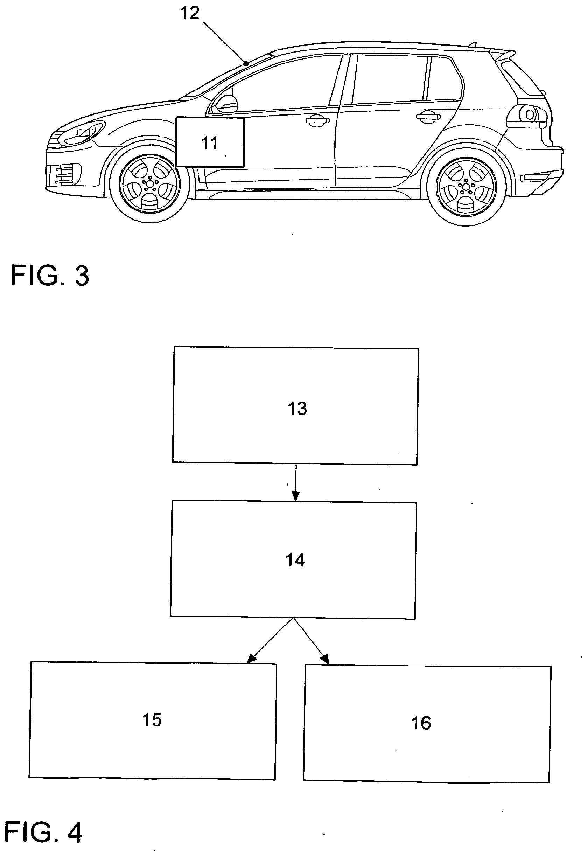

In Fig. 3 ist ein Fahrzeug 12 mit dem System 11 zum Steuern einer Übertragung von Liedkennungen. Das System 11 umfasst zumindest alle in der Figur beschriebenen Elemente.

In Fig. 4 werden Schritte des Verfahren zur Übertragung von Liedkennungen von einem Infotainmentgerät in einem Fahrzeug auf ein Mobilgerät aus einer Mehrzahl von Mobilgeräten über zumindest eine Schnittstelle beschrieben. Im Schritt 13 werden alle über die Schnittstelle verbundenen und/oder verbindbaren Mobilgeräte identifiziert. Im Schritt 14 wird ermittelt, ob für ein identifiziertes Mobilgerät eine Voreinstellung gespeichert ist, die eine Übertragung auf dieses Mobilgerät vorsieht. Wenn nur ein einziges Mobilgerät mit dieser Voreinstellung identifiziert wurde, erfolgt auf dieses Mobilgerät eine automatische Übertragung von gespeicherten Liedkennungen vom Infotainmentgerät (Schritt 15). Wenn kein Mobilgerät mit dieser Voreinstellung oder mindestens zwei Mobilgeräte mit dieser Voreinstellung identifiziert wurden, erfolgt ein Übertragen von einer gespeicherten Liedkennung vom Infotainmentgerät auf das ausgewählte Mobilgerät nach einer Auswahl eines Mobilgeräts aus der Menge der identifizierten Mobilgeräte mittels eines Nutzers (Schritt 16).

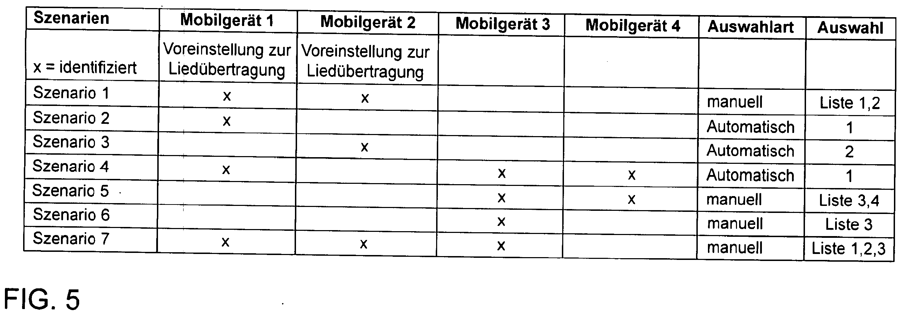

Fig. 5 zeigt verschiedene Szenarien zu identifizierten Mobilgeräten. Die beschriebene Voreinstellung für eine Übertragung der Liedkennungen ist in dem dargestellten Beispiel für die Mobilgeräte "Mobilgerät 1" und "Mobilgerät 2" in der Speichereinheit des Infotainmentgeräts gespeichert. Für die Mobilgeräte "Mobilgerät 3" und "Mobilgerät 4" ist keine Voreinstellung gespeichert.

In Szenario 1 wird "Mobilgerät 1" und "Mobilgerät 2" identifiziert. Es erfolgt eine Auswahl eines Mobilgeräts aus der Menge der identifizierten Mobilgeräte - nämlich "Mobilgerät 1" und "Mobilgerät 2" - mittels eines Nutzers. Erst nach Auswahl eines Mobilgeräts werden die Liedkennungen auf das ausgewählte Mobilgerät übertragen.

In Szenario 2 wird nur "Mobilgerät 1" identifiziert. Es erfolgt eine automatische Übertragung auf das "Mobilgerät 1".

In Szenario 3 wird nur "Mobilgerät 2" identifiziert. Es erfolgt eine automatische Übertragung auf das "Mobilgerät 2".

In Szenario 4 wird "Mobilgerät 1", "Mobilgerät 3" und "Mobilgerät 4" identifiziert. Da für das "Mobilgerät 1" als einziges Mobilgerät die Voreinstellung gespeichert ist, erfolgt eine automatische Übertragung auf das "Mobilgerät 1".

In Szenario 5 wird "Mobilgerät 3" und "Mobilgerät 4" identifiziert. Es erfolgt eine Auswahl eines Mobilgeräts aus der Menge der identifizierten Mobilgeräte ― nämlich "Mobilgerät 3" und "Mobilgerät 4" ― mittels eines Nutzers. Erst nach Auswahl eines Mobilgeräts werden die Liedkennungen auf das ausgewählte Mobilgerät übertragen.

In Szenario 6 wird nur "Mobilgerät 3" identifiziert. Es erfolgt eine Auswahl eines Mobilgeräts aus der Menge der identifizierten Mobilgeräte ― nämlich nur "Mobilgerät 3"― mittels eines Nutzers.

Erst nach Auswahl eines Mobilgeräts werden die Liedkennungen auf das ausgewählte Mobilgerät übertragen.

In Szenario 7 wird "Mobilgerät 1", "Mobilgerät 2" und "Mobilgerät 3" identifiziert. Es erfolgt eine Auswahl eines Mobilgeräts aus der Menge der identifizierten Mobilgeräte ― nämlich "Mobilgerät 1", "Mobilgerät 2" und "Mobilgerät 3" ― mittels eines Nutzers. Erst nach Auswahl eines Mobilgeräts werden die Liedkennungen auf das ausgewählte Mobilgerät übertragen.

## Patentansprüche

1. Verfahren zur Übertragung von gespeicherten Liedkennungen von einem Infotainmentgerät (1) in einem Fahrzeug (12) auf ein Mobilgerät aus einer Mehrzahl von Mobilgeräten (3) über zumindest eine Schnittstelle (4, 5, 5.1, 5.2, 5.3), umfassend zumindest:
- ein Identifizieren aller über die Schnittstelle (4, 5, 5.1, 5.2, 5.3) verbundenen und/oder verbindbaren Mobilgeräte (3), wobei ein verbindbares Mobilgerät (3) ein Mobilgerät (3) ist, das sich in einer Reichweite einer drahtlosen Verbindung zu dem Infotainmentgerät (1) befindet und damit von der Schnittstelle (4, 5, 5.1, 5.2, 5.3) erkennbar ist, und/oder ein Mobilgerät (3) ist, für welches Verbindungsdaten gespeichert sind;
**gekennzeichnet durch**
- ein Ermitteln, ob für ein identifiziertes Mobilgerät (3) eine Voreinstellung in einer Speichereinheit des Infotainmentgeräts (1) gespeichert ist, die eine Übertragung auf dieses Mobilgerät (3) vorsieht;
- ein Darstellen der identifizierten Mobilgeräte (3) auf einem Display eines Infotainmentgeräts (1) und/oder eines Kombiinstruments des Fahrzeugs (12), wobei die identifizierten Mobilgeräte (3), für die eine Voreinstellung gespeichert ist, die eine automatische Übertragung auf dieses Mobilgerät (3) vorsieht, hervorgehoben dargestellt werden;
- ein Übertragen der gespeicherten Liedkennungen vom Infotainmentgerät (1)
∘ automatisch, wenn nur ein einziges Mobilgerät (3) mit dieser Voreinstellung identifiziert wurde, auf dieses Mobilgerät (3),
∘ nach einer Auswahl eines Mobilgeräts aus der Menge der identifizierten Mobilgeräte mittels eines Nutzers, wenn kein Mobilgerät (3) mit dieser Voreinstellung oder mindestens zwei Mobilgeräte (3) mit dieser Voreinstellung identifiziert wurden, auf das ausgewählte Mobilgerät;
wobei die Übertragung der Liedkennungen vom Infotainmentgerät (1) auf das Mobilgerät (3) als Synchronisationsverfahren ausgeführt wird, indem überprüft wird, ob eine im Infotainmentgerät (1) gespeicherte Liedkennung schon auf dem Mobilgerät (3) gespeichert ist.

2. Verfahren nach Anspruch 1, **dadurch gekennzeichnet, dass** die Auswahl des Mobilgeräts (3) über mindestens eine Taste, insbesondere innerhalb des Fahrzeugs (12), oder über eine Spracherkennung erfolgt.

3. Verfahren nach einem der vorhergehenden Ansprüche, **dadurch gekennzeichnet, dass** die Voreinstellung für ein Mobilgerät (3) im Fahrzeug (11) speicherbar und/oder veränderbar ist.

4. Verfahren nach Anspruch 3, **dadurch gekennzeichnet, dass** die Voreinstellung nur für vom Nutzer festgelegte Mobilgeräte (3) festgelegt wird, insbesondere für eine bestimmte Art von Mobilgeräten und/oder eine bestimmte Marke von Mobilgeräten und/oder Mobilgeräte zur Nutzung von bestimmten Funktionen und/oder eindeutig identifizierbare Mobilgeräte.

## Claims

1. Method for transmission of stored song identifications from an infotainment device (1) in a vehicle (12) to a mobile device of a plurality of mobile devices (3) via at least one interface (4, 5, 5.1, 5.2, 5.3), comprising at least:
- identifying all mobile devices (3) connected and/or connectable via the interface (4, 5, 5.1, 5.2, 5.3), wherein a connectable mobile device (3) is a mobile device (3) which is within a range of a wireless connection to the infotainment device (1) and is thus detectable by the interface (4, 5, 5.1, 5.2, 5.3), and/or is a mobile device (3) for which connection data are stored;
**characterized by**
- determining whether a preset for an identified mobile device (3) is stored in a memory unit of the infotainment device (1), which preset provides for a transmission to said mobile device (3);
- displaying the identified mobile devices (3) on a display of an infotainment device (1) and/or a combination instrument of the vehicle (12), wherein the identified mobile devices (3) for which a preset is stored which provides for an automatic transmission to said mobile device (3) are shown highlighted;
- transmitting the stored song identifications from the infotainment device (1)
∘ if only a single mobile device (3) with this preset has been identified, automatically to this mobile device (3),
o if no mobile device (3) with this preset or at least two mobile devices (3) with this preset have been identified, after a selection of a mobile device from the set of identified mobile devices by means of a user, to the selected mobile device;
wherein the transmission of the song identifications from the infotainment device (1) to the mobile device (3) is executed as a synchronization process in that a check is performed as to whether a song identification stored in the infotainment device (1) is already stored on the mobile device (3).

2. Method according to Claim 1, **characterized in that** the selection of the mobile device (3) takes place via at least one button, in particular within the vehicle (12), or via voice recognition.

3. Method according to one of the preceding claims, **characterized in that** the preset for a mobile device (3) can be stored and/or modified in the vehicle (11).

4. Method according to Claim 3, **characterized in that** the preset is established only for mobile devices (3) specified by the user, in particular for a specific type of mobile devices and/or a specific brand of mobile devices and/or mobile devices for using specific functions and/or uniquely identifiable mobile devices.

## Revendications

1. Procédé de transmission d'identifications de chansons enregistrées à partir d'un appareil d'infoloisirs (1) dans un véhicule (12) à un appareil mobile d'une pluralité d'appareils mobiles (3) via au moins une interface (4, 5, 5.1, 5.2, 5.3), comprenant au moins :
- une identification de tous les appareils mobiles (3) étant ou pouvant être connectés via l'interface (4, 5, 5.1, 5.2, 5.3), un appareil mobile (3) pouvant être connecté étant un appareil mobile (3) qui se trouve à une portée d'une connexion sans fil de l'appareil d'infoloisirs (1) et peut ainsi être reconnu par l'interface (4, 5, 5.1, 5.2, 5.3), et/ou est un appareil mobile (3) pour lequel des données de connexion sont enregistrées ;
**caractérisé par**
- une détermination pour savoir si pour un appareil mobile (3) identifié, un préréglage est enregistré dans une unité de mémoire de l'appareil d'infoloisirs (1), laquelle prévoit une transmission à cet appareil mobile (3) ;
- une représentation des appareils mobiles (3) identifiés sur un écran d'un appareil d'infoloisirs (1) et/ou d'un instrument combiné du véhicule (12), les appareils mobiles (3) identifiés, pour lesquels un préréglage est enregistré, lequel prévoit une transmission automatique à cet appareil mobile (3), étant représentés en surbrillance ;
- une transmission des identifications de chansons enregistrées à partir de l'appareil d'infoloisirs (1)
∘ automatique, lorsqu'un seul appareil mobile (3) comprenant ce préréglage a été identifié, sur cet appareil mobile (3),
∘ après une sélection d'un appareil mobile de l'ensemble d'appareils mobiles identifiés au moyen d'un utilisateur, lorsqu'aucun appareil mobile (3) comprenant ce préréglage ou au moins deux appareils mobiles (3) comprenant ce préréglage ont été identifiés, sur l'appareil mobile sélectionné ;
la transmission des identifications de chansons à partir de l'appareil d'infoloisirs (1) à l'appareil mobile (3) est effectuée sous la forme d'un procédé de synchronisation, en vérifiant si une identification de chanson enregistrée dans l'appareil d'infoloisirs (1) est déjà enregistrée dans l'appareil mobile (3).

2. Procédé selon la revendication 1, **caractérisé en ce que** la sélection de l'appareil mobile (3) est effectuée à l'aide d'au moins une touche, en particulier à l'intérieur du véhicule (12), ou d'une reconnaissance vocale.

3. Procédé selon l'une quelconque des revendications précédentes, **caractérisé en ce que** le préréglage pour un appareil mobile (3) peut être enregistré et/ou modifié dans le véhicule (11).

4. Procédé selon la revendication 3, **caractérisé en ce que** le préréglage n'est défini que pour des appareils mobiles (3) définis par l'utilisateur, en particulier pour un type particulier d'appareils mobiles et/ou une marque particulière d'appareils mobiles et/ou des appareils mobiles pour l'utilisation de fonctions particulières et/ou des appareils mobiles clairement identifiables.
